# EUROPÄISCHE PATENTANMELDUNG

(11) **EP 1 036 768 A1**
(43) Veröffentlichungstag der Anmeldung: **20.09.2000**
(21) Anmeldenummer: 00104755.4
(22) Anmeldetag: 04.03.2000
(51) Int. Cl.: C02F 1/32, C02F 1/44, C02F 9/00, C02F 1/78

(54) **Verfahren zum Reinigen, Entkeimen und Anreichern von Wasser mit Sauerstoff**

(30) Priorität: 18.03.1999 DE 19912109
(71) Anmelder: Uwatech Umwelt- und Wassertechnik GmbH, 29336 Nienhagen (DE); Bay Zoltan Foundation for Applied Research Institute for Biotechnology, 6701 Szeged (HU)
(72) Erfinder: Kohlheb,Robert, 29336 Nienhagen (DE); Hancz, Péter, 9024 Györ (HU); Mécs, Imre, 6725 Szeged (HU); Kàlman, Miklos, 6724 Szeged (HU); Szöllösy, Ervin, 6722 Szeged (HU)
(74) Vertreter: König, Norbert, Dipl.-Phys. Dr.

(57) **Zusammenfassung**

Die Erfindung betrifft ein Verfahren zum Reinigen, Entkeimen und Anreichern von Wasser mit Sauerstoff und ist gekennzeichnet durch folgende Verfahrensschritte: Vorbehandlung von Rohwasser durch chemische Vorbehandlung, pH-Wert-Einstellung, Zugabe von Inhibitoren und/oder Vorfiltration, Entkeimung durch UV-Lichtbehandlung und/oder Mikro- oder Ultrafiltration und/oder Umkehrosmose, Anreicherung von Sauerstoff durch Begasung des vorflitrierten und entkeimten Rohwassers mit Sauerstoff oder Luft in einem Membrankontaktor.

## Beschreibung

Die Erfindung betrifft ein Verfahren zum Reinigen, Entkeimen und Anreichern von Wasser mit Sauerstoff.

Die Aufgabe der vorliegenden Erfindung besteht darin, ein vereinfachtes, preiswertes Verfahren anzugeben, mit dem gereinigtes, keimfreies und mit Sauerstoff angereichertes Wasser hergestellt werden kann.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Nach dem Anspruch 1 kann gereinigtes, entkeimtes und mit Wasserstoff angereichertes Wasser unter Verwendung von Trinkwasser hergestellt werden, indem das Trinkwasser filtriert, mit UV-Licht behandelt und dann mit Sauerstoff oder Luft begast wird.

Die Entkeimung kann auch dadurch verbessert werden, daß das mit UV-Licht behandelte Wasser einer Umkehrosmose-Behandlung unterzogen wird, wobei durch diese zusätzliche Behandlung noch eine Pyrogenabtrennung erreicht wird.

Bei Verwendung von nicht so sauberen Wasser wie Trinkwasser, beispielsweise Flußwasser, Prozeßwasser, Quellwasser und Brunnenwasser, erfolgt anstelle einer Behandlung mit UV-Licht oder nach einer Behandlung mit UV-Licht eine Mikro- oder Ultrafiltration, wobei zusätzlich oder alternativ eine Umkehrosmose-Behandlung vorgesehen ist in Abhängigkeit von der Belastung des verwendeten Wassers.

Die Begasung des Wassers erfolgt vorzugsweise mit einem sehr effektiv wirkenden Membrankontaktor.

Wenn das verwendete Rohwasser (Brunnenwasser, Quellwasser, Prozeßwasser, Flußwasser, Trinkwasser) beispielsweise eine hohe Härte aufweist oder mit organischen Stoffen belastet ist, ist vor der Vorfiltration noch eine chemische Behandlung und/oder eine pH-Wert-Einstellung und/oder die Zugabe von Inhibitoren vorgesehen. Durch die Zugabe von Inhibitoren kann beispielsweise verhindert werden, daß Bariumsulfat, Kalziumsulfat oder Strontiumsulfat beim Aufkonzentrieren in den Verfahrensschritten Mikro- oder Ultrafiltration und Umkehrosmose-Behandlung ausfällen.

Das mit dem erfindungsgemäßen Verfahren hergestellte gereinigte, entkeimte und mit Sauerstoff angereichterte Wasser ist vorzüglich geeignet zum Spülen von geschlachtetem Geflügel, um die für den Menschen gefährlichen Campylobakterien und andere sauerstoffempfindliche Bakterien (Gas-gaugrena, Clostridium tetani, Clostridium botulini usw.) zu töten. Diese Campylobakterien werden von Geflügel bei deren Genuß übertragen und bewirken beim Menschen Durchfall, Muskelkrämpfe, starke Schmerzen und Fieber.

Das erfindungsgemäße Verfahren soll nachfolgend anhand verschiedener Varianten, die in einem Fließbild dargestellt sind, erläutert werden.

Für das erfindungsgemäße Verfahren kann als Rohwasser Trinkwasser, Flußwasser, Prozeßwasser, Quellwasser und Brunnenwasser eingesetzt werden. Dieses Rohwasser wird zunächst chemisch vorbehandelt und/oder es wird eine pH-Wert-Einstellung vorgenommen und/oder es werden Inhibitoren zugesetzt. Auf diese Vorbehandlungsstufe kann beispielsweise verzichtet werden, wenn die Härte des Wassers nur gering ist oder die Belastung mit organischen Stoffen gering ist oder die Menge an ausfällbaren Stoffen gering ist. Danach wird das Rohwasser vorfiltriert, um Feststoffe abzufiltern. Vor der Vorfiltration kann dem Rohwasser bereits Luft zugeführt werden.

Nach der Vorfiltration (Stufe 2) durchströmt das vorfiltrierte Wasser eine Mikro- oder Ultrafiltrationsstufe 5, danach eine Umkehrosmose-Stufe 6 und danach einen Membrankontaktor 7 zur Anreicherung von Sauerstoff, wobei die Sauerstoffanreicherung durch Zufuhr von Sauerstoff oder durch Zufuhr von Luft erfolgt. Das den Membrankontaktor verlassende mit Sauerstoff angereicherte Wasser gelangt dann, wie beispielsweise angegeben in einen Spülwasserverteiler 8 von Geflügelschlachtereien. Die beschriebenen Verfahrensstufen sind insbesondere vorgesehen bei hochbelastetem Wasser, wie Flußwasser, Prozeßwasser, Quellwasser und Brunnenwasser. Falls die Belastung nicht zu groß ist, kann auf die Umkehrosmose-Stufe 6 verzichtet werden.

Bei Verwendung von sehr saurem Rohwasser, beispielsweise Trinkwasser, wird anstelle der Mikro-oder Ultrafiltration 5 eine Behandlung mit UV-Licht (Stufe 3) vorgesehen, der je nach Belastung noch die Umkehrosmose-Behandlung 6 nachgeschaltet sein kann, bevor das behandelte Rohwasser (Trinkwasser) in den Membrankontaktor 7 zur Anreicherung mit Sauerstoff eintritt.

Bei Rohwasser hoher Qualität jedoch hoher ionaler Belastung können die Stufen 3 und 5 umgangen werden und kann das vorfiltrierte Rohwasser direkt in die Umkehrosmose-Behandlungsstufe 6 geleitet werden und von dort dann in den Membrankontaktor 7 zur Anreicherung mit Sauerstoff.

Falls Trinkwasser sehr hoher Qualität zur Verfügung steht, reicht es aus, das vorfiltrierte Wasser vor der Zufuhr in den Membrankontakor 7 in der Stufe 3 einer UV-Lichtbehandlung zu unterziehen.

Bei guter Beherrschung eines Ozonbehandlungsverfahrens ist es möglich, das vorfiltrierte Wasser direkt in eine Qzonbehandlungsstufe 4 einzuleiten oder das ozonierte Wasser der Mikro- oder Ultrafiltrationsstufe zuzuführen und das behandelte Wasser direkt als Spülwasser zu verwenden.

Die Mikro- oder Ulltrafiltrationsstufe 5 und die Umkehrosmose-Stufe 6 sind mit Abzugseinrichtungen zum Entfernen von Konzentrat versehen.

Überschüssiges mit Luft und/oder Sauerstoff behandeltes Wasser wird über eine Leitung 10 zurückgeleitet.

Zur Prüfung der Menge an aufgenommenen Sauerstoff sind vor und hinter dem Spülwasserverteiler Sauerstoffmeßstellen vorgesehen.

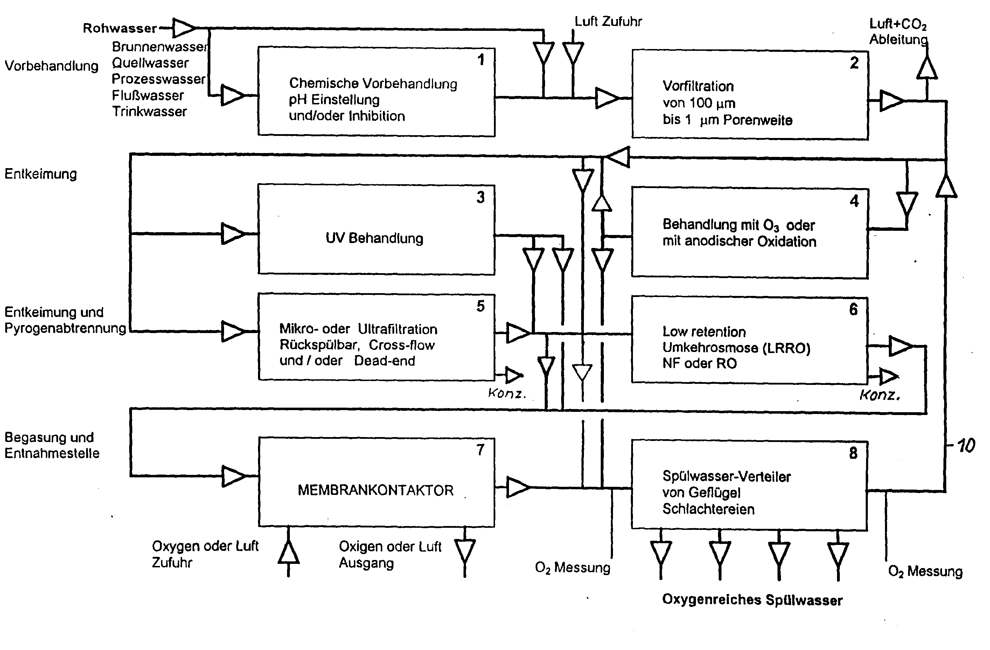

## Patentansprüche

1. Verfahren zum Reinigen, Entkeimen und Anreichern von Wasser mit Sauerstoff,
**gekennzeichnet durch** folgende Verfahrensschritte bei Verwendung von Trinkwasser:
- Vorfiltrieren des Wassers zum Entfernen von Feststoffen,
- Behandlung des vorfiltrierten Wassers mit UV-Licht zur Entkeimung und
- Begasung des mit UV-Licht behandelten Wassers mit Sauerstoff oder Luft.

2. Verfahren nach Anspruch 1, **dadurch gekennzeichnet,** daß vor dem Begasungsschritt das mit UV-Licht behandelte Wasser einer Umkehrosmose-Behandlung unterzogen wird zur Pyrogenabtrennung und weiteren Entkeimung.

3. Verfahren nach Anspruch 1 oder 2, **dadurch gekennzeichnet,** daß bei Verwendung von belastetem Wasser, wie Flußwasser, Prozeßwasser, Quellwasser und Brunnenwasser, das vorgefilterte Wasser anstelle oder nach der Behandlung mit UV-Licht einer Mikro- oder Ultrafiltration und/oder Umkehrosmose-Behandlung unterzogen wird zur Entkeimung und Pyrogenabtrennung.

4. Verfahren nach Anspruch 1, **dadurch gekennzeichnet,** daß die Verfahrensschritte Behandlung mit UV-Licht und Begasung mit Sauerstoff oder Luft ersetzt sind durch den Verfahrensschritt Behandlung mit Ozon oder mit anodischer Oxidation.

5. Verfahren nach einem der vorhergehenden Ansprüche, **dadurch gekennzeichnet,** daß zur Begasung ein Membrankontaktor verwendet wird.

6. Verfahren nach einem der vorhergehenden Ansprüche, **dadurch gekennzeichnet,** daß das Wasser vor der Vorfiltration chemisch vorbehandelt und/oder hinsichtlich pH-Wert eingestellt und/oder mit Inhibitoren versetzt wird.

7. Verwendung des nach einem der vorhergehenden Ansprüche behandelten Wassers als Spülwasser für Schlachtereien, insbesondere Geflügeischlachtereien.

8. Verfahren nach Anspruch 4, **dadurch gekennzeichnet,** daß das ozonierte Wasser direkt als Spülwasser oder vor der Verwendung als Spülwasser noch einer Mikro- oder Ultrafiltrationsbehandlung unterzogen wird.
